# FASCICULE DE BREVET EUROPEEN

(11) **EP 2 013 816 B1**
(45) Date de publication et mention de la délivrance du brevet: **15.06.2011**
(21) Numéro de dépôt: 07724082.8
(22) Date de dépôt: 06.04.2007
(51) Int. Cl.: G06K 9/00

(54) **PROCEDE D'IDENTIFICATION D'UNE PERSONNE PAR ANALYSE DE CARACTERISTIQUES DE SES CILS**
PROZEDUR ZUM IDENTIFIZIEREN EINER PERSON DURCH WIMPERNANALYSE
PROCEDURE FOR IDENTIFYING A PERSON BY EYELASH ANALYSIS

(30) Priorité: 28.04.2006 FR 0603895
(43) Date de publication de la demande: 14.01.2009
(73) Titulaire: MORPHO, 75015 Paris (FR)
(72) Inventeur: COTTARD, Martin, F-75015 Paris (FR); GENTRIC, Stephane, F-75015 Paris (FR)
(74) Mandataire: Maillet, Alain
(86) Numéro de dépôt international: PCT/EP2007/003141
(87) Numéro de publication internationale: WO 2007/124845

(56) Documents cités:
- EP-A- 1 018 297
- EP-A- 1 431 810
- EP-A1- 1 431 907
- US-A1- 2005 270 386
- US-B1- 6 546 121
- KONG W-K ET AL: "DETECTING EYELASH AND REFLECTION FOR ACCURATE IRIS SEGMENTATION" INTERNATIONAL JOURNAL OF PATTERN RECOGNITION AND ARTIFICIAL INTELLIGENCE, WORLD SCIENTIFIC PUBLISHING, SINGAPORE, SI, vol. 17, no. 6, septembre 2003 (2003-09), pages 1025-1034, XP001171781 ISSN: 0218-0014
- A K BACHOO, J-R TAPAMO: "Texture detection for segmentation of iris images" SAICSIT '05: PROCEEDINGS OF THE 2005 ANNUAL RESEARCH CONFERENCE OF THE SOUTH AFRICAN INSTITUTE OF COMPUTER SCIENTISTS AND INFORMATION TECHNOLOGISTS ON IT RESEARCH IN DEVELOPING COUNTRIES, 2005, page 243, XP009075732 White River, South Africa
- SAGEM DÉFENSE SÉCURITÉ: "Offre de stage aéronautique: Identification d'une personne par analyse de ses cils. (H/F)" INTERNET ARTICLE, [Online] 3 octobre 2006 (2006-10-03), XP002409880 Extrait de l'Internet: URL:http://www.aerocontact.com/jobs/ac_stg _detail2.php?ID=2224&PHPSESSID=2c1e1db4a8d 5b> [extrait le 2006-11-30]

## Description

La présente invention concerne un procédé d'identification d'une personne, un procédé combiné d'identification d'une personne ainsi qu'un dispositif d'acquisition adapté à mettre en oeuvre de tels procédés. Elle trouve application dans le domaine de la reconnaissance biométrique et en particulier dans le domaine de l'identification par analyse des cils.

L'identification par reconnaissance biométrique est utilisée pour sécuriser des installations comme, par exemple, des bâtiments ou des machines, ou pour obtenir la délivrance de droits, comme par exemple, la délivrance d'une carte d'identité, le versement d'une pension, etc. Cette technologie permet de s'affranchir de codes d'accès ou de cartes qui peuvent être volés ou falsifiés. L'utilisation de cette technologie permet de renforcer la sécurité dans la mesure où la probabilité que deux personnes aient deux biométries identiques est quasiment nulle.

On connaît un procédé d'identification d'une personne par analyse de son iris qui est basé sur la transformation de l'image de l'iris en un modèle et la comparaison de ce modèle avec des modèles de référence stockés dans une base de données. Le modèle issu de la transformation est généré par un algorithme à partir de l'image de l'iris et contient un ensemble d'informations caractéristiques de l'image de l'iris. Comme pour les images d'iris, ces modèles sont uniques pour chaque personne.

Le procédé d'identification débute par une étape de capture d'une image de l'iris à l'aide d'un capteur de prise d'image. Le procédé d'identification se poursuit alors par une étape de transformation de l'image ainsi capturée en un modèle, puis par une étape de comparaison du modèle avec les modèles de référence d'une base de données et par une étape de prise de décision concernant l'identité de la personne à partir du résultat de l'étape de comparaison.

Ce procédé d'identification nécessite que l'image capturée soit nette et, lorsque l'image n'est pas suffisamment nette, il peut y avoir un rejet de la personne bien que celle-ci aurait dû être identifiée. Il peut également arriver que la personne désirant se faire identifier n'oriente pas convenablement son oeil et donc son iris par rapport au capteur de prise d'image.

Un objet de la présente invention est de proposer un procédé d'identification d'une personne qui ne présente pas les inconvénients de l'art antérieur et qui, en particulier, permette de s'affranchir du positionnement de l'oeil de la personne par rapport au capteur de prise d'image.

A cet effet, est proposé un procédé d'identification d'une personne par un dispositif d'acquisition adapté à capturer l'image des cils de ladite personne, le procédé comprenant, lorsque la personne est en vis-à-vis dudit dispositif d'acquisition :
- une étape de capture d'une image des cils d'au moins un des yeux de la personne ;
- une étape de comparaison des caractéristiques des cils de l'image ainsi capturée avec les caractéristiques correspondantes d'images de cils d'une base de données ; et
- une étape de prise de décision concernant l'identité de la personne à partir du résultat de ladite étape de comparaison.

Selon un mode de réalisation particulier, les caractéristiques comprennent l'implantation des racines des cils le long de la paupière.

Selon un mode de réalisation particulier, les caractéristiques comprennent la densité des cils.

Selon un mode de réalisation particulier, les caractéristiques comprennent la variation de la densité des cils.

Selon un mode de réalisation particulier, les caractéristiques comprennent la couleur des cils.

Avantageusement, entre l'étape de capture et l'étape de comparaison, il comprend une étape de modélisation des cils de l'image par des courbes et les caractéristiques comprennent ces courbes.

L'invention propose également un procédé combiné d'identification d'une personne par un dispositif d'acquisition adapté à capturer l'image des cils de ladite personne et l'image de l'iris de la personne, le procédé comprenant, lorsque la personne est en vis-à-vis dudit dispositif d'acquisition:
- une étape de capture d'une image des cils d'au moins un des yeux de la personne ;
- une étape de capture d'une image de l'iris de la personne ;
- une première étape de comparaison des caractéristiques des cils de l'image des cils ainsi capturée avec les caractéristiques correspondantes d'images de cils d'une base de données ;
- une étape de transformation de l'image d'iris ainsi capturée en son modèle ;
- une deuxième étape de comparaison dudit modèle avec des modèles de référence d'une base de données ; et
- une étape de prise de décision concernant l'identité de la personne à partir d'une combinaison du résultat de ladite première étape de comparaison et du résultat de ladite deuxième étape de comparaison.

Selon un mode de réalisation particulier, la combinaison du résultat de la première étape de comparaison et du résultat de la deuxième étape de comparaison est modifiée en fonction de la valeur d'au moins un critère de validité.

Selon un mode de réalisation particulier, le critère de validité est représentatif de la comparaison entre la netteté de l'image des cils et la netteté de l'image de l'iris.

L'invention propose également un dispositif d'acquisition adapté à la mise en oeuvre d'un procédé d'identification selon l'une des variantes précédentes et comprenant :
- des moyens de capture prévus pour capturer une image des cils de la personne ;
- des moyens de comparaison prévus pour comparer des caractéristiques des cils de l'image ainsi capturée avec des caractéristiques correspondantes d'images de cils d'une base de données ; et
- des moyens de prise de décision prévus pour prendre une décision quant à l'identité de la personne à partir d'informations fournies par les moyens de comparaison.

L'invention propose également un dispositif combiné d'acquisition adapté à la mise en oeuvre d'un procédé combiné d'identification selon l'une des variantes précédentes et comprenant :
- des moyens de capture prévus pour capturer une image des cils de la personne ;
- des moyens de capture prévus pour capturer une image de l'iris de la personne ;
- des moyens de transformation prévus pour transformer l'image de l'iris en un modèle ;
- des premiers moyens de comparaison prévus pour comparer des caractéristiques des cils de l'image des cils ainsi capturée avec des images de cils d'une base de données ;
- des deuxièmes moyens de comparaison prévus pour comparer ledit modèle avec des modèles de référence d'une base de données ; et
- des moyens de prise de décision prévus pour prendre une décision quant à l'identité de la personne à partir d'une combinaison d'informations fournies par les premiers moyens de comparaison et d'informations fournies par les deuxièmes moyens de comparaison.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un oeil dont les cils doivent être reconnus ;
la Fig. 2 représente un dispositif d'acquisition selon l'invention ; et
la Fig. 3 représente un algorithme d'un procédé d'identification selon l'invention.

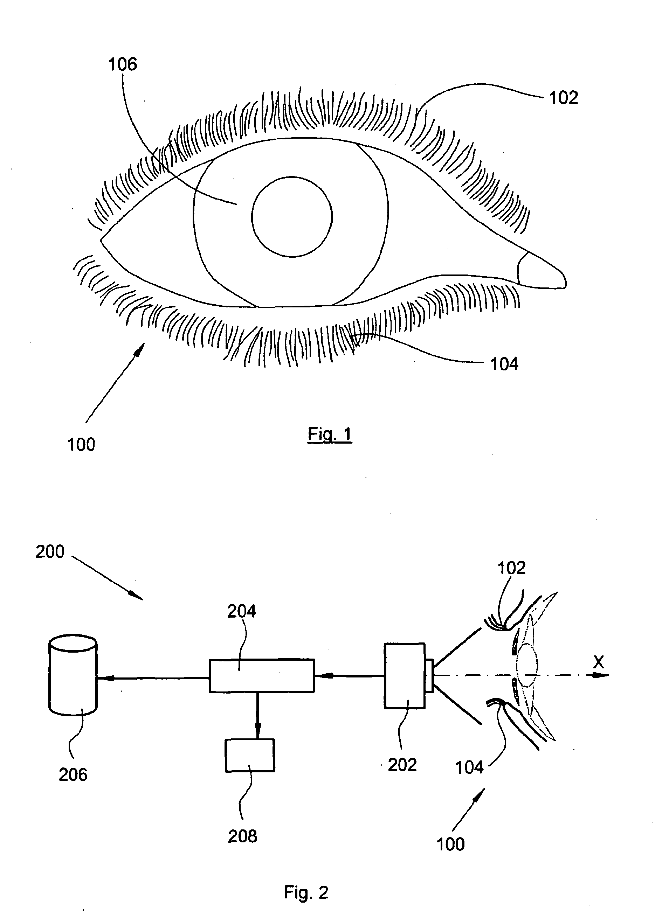

la Fig. 1 représente un oeil 100 d'une personne comprenant un iris 106, des cils inférieurs 104 et des cils supérieurs 102.

Les cils 102, 104 d'une personne sont différents de ceux d'une autre personne. Ainsi les cils 102, 104 d'une personne sont porteurs de certaines caractéristiques qui sont remarquables et qui permettent de différencier les cils 102, 104 d'une personne des cils d'une autre personne à partir d'une image de ces cils 102, 104.

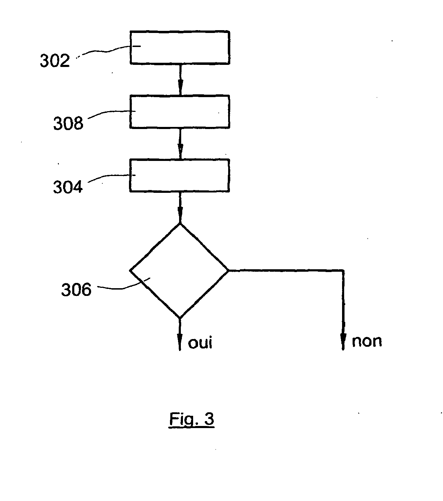

La Fig. 3 représente un algorithme d'un procédé d'identification 300 d'une personne par un dispositif d'acquisition adapté à capturer l'image des cils 102, 104 de la personne. Le procédé d'identification 300 comprend ainsi, lorsque la personne est en vis-à-vis dudit dispositif d'acquisition :
- une étape de capture 302 d'une image des cils 102, 104 de la personne ;
- une étape de comparaison 304 des caractéristiques des cils 102, 104 de l'image des cils 102, 104 ainsi capturée avec les caractéristiques correspondantes d'images de cils d'une base de données ; et
- une étape de prise de décision 306 concernant l'identité de la personne à partir du résultat de l'étape de comparaison.

Le fait que seules les images des cils 102, 104 sont analysées permet de s'affranchir de la position de l'iris 106 contrairement aux procédés d'identification de l'état de la technique qui sont basés sur l'analyse de l'iris 106. En effet, même si la personne désirant se faire identifier ne place pas correctement son iris, sa tête et donc ses cils se positionnent correctement devant le dispositif d'acquisition, par exemple du fait de la présence de moyens de positionnement qui permettent le positionnement correct de la tête.

En outre, les cils 102, 104 sont des éléments variant au cours de la vie de la personne, contrairement à une empreinte digitale ou à un iris 106 qui sont constants. Ainsi, il peut être préférable d'utiliser un procédé d'identification 300 par analyse des cils 102, 104 lorsque la pérennité des données de la base de données n'est pas envisageable, c'est-à-dire lorsque ces données doivent devenir obsolètes au bout d'un certain temps. Ce peut être le cas lorsque le procédé d'identification 300 est utilisé pour l'entrée dans une exposition temporaire, ou pour identifier des enfants, par exemple à l'entrée d'une cantine. Ainsi au cours du temps, la morphologie des paupières et des cils se modifie petit à petit et les données de la base de données ne sont plus représentatives des personnes. Et ainsi, même en cas d'intrusion dans la base de données, les données qui pourraient être piratées deviennent sans intérêt au cours du temps.

Les caractéristiques des cils 102, 104 peuvent comprendre différents éléments dont une liste non exhaustive est donnée ci-après, et les caractéristiques des cils 102, 104 peuvent inclure un ou plusieurs de ces éléments.

L'un de ces éléments peut consister en l'implantation des racines des cils 102, 104 le long de la paupière. En effet, il est possible d'analyser la position des racines des cils 102, 104 par analyse de l'image capturée et d'en déduire leur implantation le long des paupières. Cette implantation peut être une implantation relative, c'est-à-dire la position des cils 102, 104 les uns par rapport aux autres, ou une implantation absolue, c'est-à-dire la forme globale de l'ensemble des cils 102, 104 par rapport à un référentiel donné. Selon un mode de réalisation particulier, l'origine du référentiel est l'un des coins de l'oeil et les axes de référence sont un axe horizontal et un axe vertical.

Un autre de ces éléments peut consister en la densité des cils 102, 104. Cette densité peut être obtenue, par exemple, par approximation du nombre de cils 102, 104 sur les paupières et calcul de la densité, ou par mesure du niveau de gris de l'image capturée et calcul de la densité, ou par tout autre méthode adéquate. Cette densité peut être une densité globale, c'est-à-dire qu'elle est calculée sur l'ensemble de l'oeil. Cette densité peut être une densité locale, c'est-à-dire que seule une partie des cils 102, 104 est prise en compte pour déterminer la densité. Par exemple, il est possible de prendre en compte uniquement les cils supérieurs 102, ou uniquement les cils inférieurs 104, ou uniquement la partie gauche ou droite de ces cils 102, 104.

Un autre de ces éléments peut consister en la variation de la densité des cils 102, 104. Cette variation peut être observée le long de la paupière et quantifiée, par exemple, par analyse du niveau de gris de l'image capturée.

Un autre de ces éléments peut consister en la couleur des cils 102, 104. En effet, la couleur des cils 102, 104 de chaque personne si distingue de la couleur des cils d'une autre personne et la mesure de cette couleur permet de différencier les personnes.

Il est également possible de modéliser les cils 102, 104 de l'image par des courbes du type splines, polynômes ou autres. Une étape de modélisation 308 des cils 102, 104 est alors insérée entre l'étape de capture 302 et l'étape de comparaison 304 et les caractéristiques comprennent ces courbes.

Afin d'analyser ces différentes caractéristiques, il est possible de mettre en oeuvre un logiciel d'analyse graphique permettant de reconnaître, sur l'image, les caractéristiques recherchées.

Il est également possible de combiner le procédé d'identification 300 de la personne par ses cils 102, 104 avec un procédé d'identification de la personne par son iris 106.

Un tel procédé combiné d'identification d'une personne par un dispositif d'acquisition adapté à capturer l'image des cils 102, 104 de la personne et l'image de l'iris 106 de la personne, comprend, lorsque la personne est en vis-à-vis du dispositif d'acquisition:
- une étape de capture d'une image des cils 102, 104 d'au moins un des yeux 100 de la personne;
- une étape de capture d'une image de l'iris 106 de la personne ;
- une première étape de comparaison des caractéristiques des cils 102, 104 de l'image des cils ainsi capturée avec les caractéristiques correspondantes d'images de cils d'une base de données 206;
- une étape de transformation de l'image d'iris ainsi capturée en son modèle ;
- une deuxième étape de comparaison dudit modèle avec des modèles de référence d'une base de données ; et
- une étape de prise de décision concernant l'identité de la personne à partir d'une combinaison du résultat de ladite première étape de comparaison et du résultat de ladite deuxième étape de comparaison.

Un tel procédé combiné d'identification d'une personne permet de déterminer l'identité de la personne, en combinant le résultat des deux comparaisons.

Cette combinaison peut se baser sur un ou plusieurs critères de validité et la combinaison du résultat de la première étape de comparaison et du résultat de la deuxième étape de comparaison peut être modifiée en fonction de la valeur du ou des critères de validité.

Selon un mode de réalisation particulier, le critère de validité est représentatif de la comparaison entre la netteté de l'image des cils 102, 104 et la netteté de l'image de l'iris 106. Dans ce mode de réalisation, et en fonction de la valeur du critère de validité, la combinaison peut alors consister, par exemple, en la prise en compte du résultat de la première étape de comparaison ou en la prise en compte du résultat de la deuxième étape de comparaison.

Dans le cas où le critère de validité est représentatif de la comparaison entre la netteté de l'image des cils 102, 104 et la netteté de l'image de l'iris 106, si la netteté de l'image des cils est meilleure que la netteté de l'image de l'iris, la combinaison consiste en la prise en compte du résultat de la première étape de comparaison et, si la netteté de l'image de l'iris est meilleure que la netteté de l'image des cils, la combinaison consiste en la prise en compte du résultat de la deuxième étape de comparaison.

Dans le cas d'une utilisation simultanée des deux procédés, le procédé d'identification 300 par les cils 102, 104 peut être utilisé afin de confirmer ou d'infirmer le résultat du procédé d'identification par l'iris lorsque ce résultat est sujet à caution.

Les différentes étapes de prise de décision décrites ci-dessus peuvent, par exemple, se baser sur des analyses de similitude entre les images/modèles de l'oeil 100 à identifier et les images/modèles de référence de la base de données 206. A chaque étape de comparaison, un score représentatif de la similitude est donné et, selon que ce score est supérieur ou inférieur à une valeur de référence, la personne est considérée comme identifiée ou non.

La Fig. 2 représente un dispositif d'acquisition 200 comprenant :
- des moyens de capture 202, par exemple du type CCD, et prévus pour capturer une image des cils 102, 104 de la personne à identifier ;
- des moyens de commande et de comparaison 204 reliés au capteur d'image 202 et prévus pour commander la capture de l'image des cils 102, 104 et pour comparer des caractéristiques des cils 102, 104 de l'image des cils 102, 104 ainsi capturée avec des caractéristiques correspondantes d'images de cils d'une base de données 206 ; et
- des moyens de prise de décision 208 prévus pour prendre une décision quant à l'identité de la personne à partir d'informations fournies par les moyens de comparaison 204.

Un dispositif combiné d'acquisition prévu pour la mise en oeuvre du procédé combiné d'identification d'une personne comprend :
- des moyens de capture prévus pour capturer une image des cils 102, 104 de la personne ;
- des moyens de capture prévus pour capturer une image de l'iris 106 de la personne ;
- des moyens de transformation prévus pour transformer l'image de l'iris 106 en un modèle ;
- des premiers moyens de comparaison prévus pour comparer des caractéristiques des cils 102, 104 de l'image des cils 102, 104 ainsi capturée avec des caractéristiques correspondantes d'images de cils d'une base de données ;
- des deuxièmes moyens de comparaison prévus pour comparer ledit modèle avec des modèles de référence d'une base de données ; et
- des moyens de prise de décision prévus pour prendre une décision quant à l'identité de la personne à partir d'une combinaison d'informations fournies par les premiers moyens de comparaison et d'informations fournies par les deuxièmes moyens de comparaison.

La combinaison peut être toute fonction combinant les informations fournies par les premiers moyens de comparaison et les informations fournies par les deuxièmes moyens de comparaison, comme cela est expliqué ci-dessus.

De préférence, les moyens de commande et de comparaison et les moyens de prise de décision sont rassemblés dans une seule unité de calcul et sont réalisés par logiciel.

La mise en oeuvre de l'un des procédés d'identification décrits ci-dessus nécessite une phase d'enregistrement au cours de laquelle une image des cils 102, 104 et éventuellement une image de l'iris 106 sont capturées et stockées dans la base de données 206. La base de données 206 référence, alors, l'ensemble des personnes qui peuvent être identifiées par l'un des procédés d'identification décrits.

Bien entendu, la présente invention n'est pas limitée aux exemples et modes de réalisation décrits et représentés, mais elle est susceptible de nombreuses variantes accessibles à l'homme de l'art.

Par exemple, les procédés décrits ci-dessus sont plus particulièrement décrits sur la capture de l'image des cils d'un seul oeil, mais ils peuvent s'appliquer de la même façon dans le cas où l'image capturée représente les cils des deux yeux. Il est, en outre, possible de comparer les caractéristiques des cils de chaque oeil et de combiner les résultats de ces comparaisons afin de prendre une décision quant à l'identité de la personne.

## Revendications

1. Procédé d'identification (300) d'une personne par un dispositif d'acquisition (202) adapté à capturer l'image des cils (102, 104) de ladite personne, le procédé comprenant, lorsque la personne est en vis-à-vis dudit dispositif d'acquisition (202) :
- une étape de capture (302) d'une image des cils (102, 104) d'au moins un des yeux (100) de la personne,
- une étape automatique de comparaison (304) des caractéristiques des cils (102, 104) de l'image ainsi capturée avec les caractéristiques correspondantes d'images de cils d'une base de données (206), et
- une étape automatique de prise de décision (306) concernant l'identité de la personne à partir du résultat de ladite étape de comparaison.

2. Procédé d'identification (300) selon la revendication 1, **caractérisé en ce que** les caractéristiques comprennent l'implantation des racines des cils (102, 104) le long de la paupière.

3. Procédé d'identification (300) selon une des revendications 1 ou 2, **caractérisé en ce que** les caractéristiques comprennent la densité des cils (102, 104).

4. Procédé d'identification (300) selon une des revendications 1 à 3, **caractérisé en ce que** les caractéristiques comprennent la variation de la densité des cils (102, 104).

5. Procédé d'identification (300) selon une des revendications 1 à 4, **caractérisé en ce que** les caractéristiques comprennent la couleur des cils (102, 104).

6. Procédé d'identification (300) selon une des revendications 1 à 5, **caractérisé en ce que**, entre l'étape de capture (302) et l'étape de comparaison (304), il comprend une étape de modélisation (308) des cils (102, 104) de l'image par des courbes et **en ce que** les caractéristiques comprennent ces courbes.

7. Procédé d'identification selon une des revendications 1 à 6, dans lequel le dispositif d'acquisition est adapté à capturer l'image de l'iris (106) de la personne et **caractérisé en ce qu'**il comprend :
- une étape de capture d'une image de l'iris (106) de la personne,
- une étape de transformation de l'image d'iris ainsi capturée en son modèle,
- une étape de comparaison dudit modèle avec des modèles de référence d'une base de données, et **en ce que**
l'étape de prise de décision concernant l'identité de la personne étant une combinaison du résultat de l'étape de comparaison des caractéristiques des cils (102, 104) et du résultat de l'étape de comparaison du modèle.

8. Procédé d'identification selon la revendication 7, **caractérisé en ce que** la combinaison du résultat de l'étape de comparaison des caractéristiques des cils (102, 104) et du résultat de l'étape de comparaison du modèle est modifiée en fonction de la valeur d'au moins un critère de validité.

9. Procédé d'identification selon la revendication 8, **caractérisé en ce que** le critère de validité est représentatif de la comparaison entre la netteté de l'image des cils et la netteté de l'image de l'iris.

10. Dispositif d'acquisition (200) comprenant :
- des moyens de capture (202) prévus pour capturer une image des cils (102, 104) de la personne,
- des moyens de comparaison (204) prévus pour comparer des caractéristiques des cils (102, 104) de l'image ainsi capturée avec des caractéristiques correspondantes d'images de cils d'une base de données (206), et
- des moyens de prise de décision (208) prévus pour prendre une décision quant à l'identité de la personne à partir d'informations fournies par les moyens de comparaison (204).

11. Dispositif d'acquisition selon la revendication 10 **caractérisé en ce qu'**il comprend en outre :
- des moyens de capture prévus pour capturer une image de l'iris (106) de la personne,
- des moyens de transformation prévus pour transformer l'image de l'iris (106) en un modèle,
- des moyens de comparaison prévus pour comparer ledit modèle avec des modèles de référence d'une base de données, et **en ce que**
- les moyens de prise de décision prennent une décision quant à l'identité de la personne à partir d'une combinaison d'informations fournies par les moyens de comparaison des caractéristiques des cils (102, 104) et d'informations fournies par les moyens de comparaison du modèle.

## Claims

1. Method (300) of identifying a person by an acquisition device (202) adapted to capture the image of the eyelashes (102, 104) of the said person, the method comprising, when the person is facing the said acquisition device (202);
- a step (302) of capturing an image of the eyelashes (102, 104) of at least one of the eyes (100) of the person;
- an step (304) of comparing automatically the features of the eyelashes (102, 104) of the image thus captured with the corresponding features of eyelash images in a database (206); and
- an automatic decision-taking step (306) concerning the identity of the person from the result of the said comparison step.

2. Identification method (300) according to claim 1, **characterised in that** the features comprise the location of the roots of the eyelashes (102, 104) along the eyelid.

3. Identification method (300) according to one of claims 1 or 2, **characterised in that** the features comprise the density of the eyelashes (102, 104).

4. Identification method (300) according to one of claims 1 to 3, **characterised in that** the features comprise the variation in the density of the eyelashes (102, 104).

5. Identification method (300) according to one of claims 1 to 4, **characterised in that** the features comprise the colour of the eyelashes (102, 104).

6. Identification method (300) according to one of claims 1 to 5, **characterised in that**, between the capture step (302) and the comparison step (304), it comprises a step (308) of modelling the eyelashes (102, 104) of the image by curves and **in that** the features comprise these curves.

7. Identification method (300) according to one of claims 1 to 6, in which the acquisition device (202) is adapted to capture the image of the iris (106) of the person and **characterised in that** it comprises:
- a step of capturing an image of the iris (106) of the person;
- a step of converting the iris image thus captured into its model,;
- a step of comparing the said model with reference models in a database; and **in that**
the decision-taking step concerning the identity of the person is a combination of the result of the step of comparing the features of the eyelashes (102, 104) and of the result of the step of comparing the model.

8. Identification method according to claim 7, **characterised in that** the combination of the result of the step of comparing the features of the eyelashes (102, 104) and of the result of the step of comparing the model is modified according to the value of at least one validity criterion.

9. Identification method according to claim 8, **characterised in that** the validity criterion is representative of the comparison between the sharpness of the image of the eyelashes and the sharpness of the image of the iris.

10. Acquisition device (200) comprising:
- capture means (202) provided for capturing an image of the eyelashes (102, 104) of the person;
- comparison means (204) provided for comparing features of the eyelashes (102, 104) of the image thus captured with corresponding features of images of eyelashes in a database (206); and
- decision-taking means (208) provided for taking a decision with regard to the identity of the person from information supplied by the comparison means (204).

11. Acquisition device according to claim 10 **characterised in that** it further comprises:
- capture means provided for capturing an image of the iris (106) of the person;
- conversion means provided for converting the image of the iris (106) into a model;
- comparison means provided for comparing the said model with reference models in a database; and **in that**
- the decision-taking means take a decision with regard to the identity of the person from a combination of information supplied by the comparison means (204) of the features of the eyelashes (102, 104) and of information supplied by the comparison means of the model.

## Patentansprüche

1. Verfahren zur Identifikation (300) einer Person mittels einer Erfassungsvorrichtung (202), die dazu ausgelegt ist, ein Bild der Wimpern (102, 104) der Person zu erfassen, wobei das Verfahren die folgenden Schritte umfasst, wenn sich die Person gegenüber der Erfassungsvorrichtung (202) befindet:
- einen Schritt des Erfassens (302) eines Bildes der Wimpern (102, 104) wenigstens eines der Augen (100) der Person,
- einen automatischen Schritt des Vergleichs (304) der Merkmale der Wimpern (102, 104) des auf diese Weise erfassten Bildes mit den entsprechenden Merkmalen von Bildern von Wimpern aus einer Datenbank (206) und
- einen automatischen Schritt der Entscheidungsfassung (306) hinsichtlich der Identität der Person auf Basis des Ergebnisses des Schrittes des Vergleichs.

2. Verfahren zur Identifikation (300) gemäß Anspruch 1,
**dadurch gekennzeichnet, dass**
die Merkmale die Implantation der Wurzeln der Wimpern (102, 104) entlang des Lids umfassen.

3. Verfahren zur Identifikation (300) gemäß einem der Ansprüche 1 oder 2,
**dadurch gekennzeichnet, dass**
die Merkmale die Dichte der Wimpern (102, 104) umfassen.

4. Verfahren zur Identifikation (300) gemäß einem der Ansprüche 1 bis 3,
**dadurch gekennzeichnet, dass**
die Merkmale die Änderungen der Dichte der Wimpern (102, 104) umfassen.

5. Verfahren zur Identifikation (300) gemäß einem der Ansprüche 1 bis 4,
**dadurch gekennzeichnet, dass**
die Merkmale die Farbe der Wimpern (102, 104) umfassen.

6. Verfahren zur Identifikation (300) gemäß einem der Ansprüche 1 bis 5,
**dadurch gekennzeichnet, dass**
das Verfahren zwischen dem Schritt des Erfassens (302) und dem Schritt des Vergleichs (304) einen Schritt der Modellierung (308) der Wimpern (102, 104) des Bildes durch Kurven umfasst und dass die Merkmale diese Kurven umfassen.

7. Verfahren zur Identifikation gemäß einem der Ansprüche 1 bis 6,
bei dem die Erfassungsvorrichtung dazu ausgelegt ist, das Bild der Iris (106) der Person zu erfassen, **dadurch gekennzeichnet, dass** das Verfahren umfasst:
- einen Schritt des Erfassens eines Bildes der Iris (106) der Person,
- einen Schritt der Umwandlung des auf diese Weise erfassten Bildes der Iris in sein Grundmodell,
- einen Schritt des Vergleichs des Grundmodells mit Referenzgrundmodellen einer Datenbank,
und **dadurch**, dass
der Schritt der Entscheidungsfassung hinsichtlich der Identität der Person eine Kombination des Ergebnisses des Schritts des Vergleichs der Merkmale der Wimpern (102, 104) und des Ergebnisses des Schritts des Vergleichs des Grundmodells ist.

8. Verfahren zur Identifikation gemäß Anspruch 7,
**dadurch gekennzeichnet, dass**
die Kombination des Ergebnisses des Schritts des Vergleichs der Merkmale der Wimpern (102, 104) und des Ergebnisses des Schritts des Vergleichs der Grundmodelle abhängig vom Wert wenigstens eines Gültigkeitskriteriums modifiziert wird.

9. Verfahren zur Identifikation gemäß Anspruch 8,
**dadurch gekennzeichnet, dass**
das Gültigkeitskriterium auf einem Vergleich zwischen der Schärfe des Bildes der Wimpern und der Schärfe des Bildes der Iris beruht.

10. Erfassungsvorrichtung (200), umfassend:
- Erfassungsmittel (202) zum Erfassen eines Bildes der Wimpern (102, 104) der Person,
- Vergleichsmittel (204) zum Vergleichen der Merkmale der Wimpern (102, 104) des auf diese Weise erfassten Bildes mit den entsprechenden Merkmalen von Bildern von Wimpern aus einer Datenbank (206) und
- Mittel zur Entscheidungsfassung (208) zum Fassen einer Entscheidung hinsichtlich der Identität der Person auf Basis der durch die Vergleichsmittel (204) zur Verfügung gestellten Informationen.

11. Erfassungsvorrichtung nach Anspruch 10,
**dadurch gekennzeichnet, dass** sie weiterhin umfasst:
- Erfassungsmittel zum Erfassen eines Bildes der Iris (106) der Person,
- Transformationsmittel zum Transformieren des Bildes der Iris (106) in ein Grundmodell,
- Vergleichsmittel zum Vergleichen des Grundmodells mit Referenzgrundmodellen einer Datenbank,
und **dadurch**, dass
- die Mittel zur Entscheidungsfassung eine Entscheidung bezüglich der Identität der Person auf Basis einer Kombination der durch die Vergleichsmittel bezüglich der Merkmale der Wimpern (102, 104) und der durch die Vergleichsmittel der Grundmodelle bereitgestellten Informationen fasst.
